# EUROPÄISCHE PATENTSCHRIFT

(11) **EP 2 957 790 B1**
(45) Veröffentlichungstag und Bekanntmachung des Hinweises auf die Patenterteilung: **29.11.2017**
(21) Anmeldenummer: 15170229.7
(22) Anmeldetag: 02.06.2015
(51) Int. Cl.: F16D 48/02

(54) **DRUCKBEGRENZUNGSEINRICHTUNG IN EINER HYDRAULISCHEN STRECKE**
PRESSURE LIMITATION DEVICE IN A HYDRAULIC LINE
DISPOSITIF DE LIMITATION DE PRESSION DANS UNE VOIE HYDRAULIQUE

(30) Priorität: 16.06.2014 DE 102014211434
(43) Veröffentlichungstag der Anmeldung: 23.12.2015
(73) Patentinhaber: Schaeffler Technologies AG & Co. KG, 91074 Herzogenaurach (DE)
(72) Erfinder: Grabenstätter, Jan, 76593 Gernsbach (DE)

(56) Entgegenhaltungen:
- WO-A1-2012/107018
- DE-A1- 19 811 337
- DE-A1-102012 214 107
- US-A- 4 387 731

## Beschreibung

Die vorliegende Erfindung betrifft eine Druckbegrenzungseinrichtung in einer hydraulischen Strecke zur Kupplungsbetätigung nach dem Oberbegriff des ersten Patentanspruchs.

Hydraulische Betätigungssysteme sollen eine sichere und komfortable Betätigung der Kupplung über die in der hydraulischen Strecke angeordneten Bauteile, wie Geberzylinder und Nehmerzylinder, ermöglichen. Um insbesondere Belastungsspitzen, die mit extremen Einkuppelgeschwindigkeiten und damit Drehmomentspitzen verbunden sind, zu vermeiden, kommen Druckbegrenzungseinrichtungen zum Einsatz, die richtungsabhängig die Strömungsgeschwindigkeit des Fluids beeinflussen. Zur Begrenzung der Einkuppelgeschwindigkeit werden dabei häufig so genannte "Peak Torque Limiter" (PTL) eingesetzt. Dabei werden beim Durchströmen des PTL oder Drehmomentspitzenbegrenzers in Einkuppelrichtung Druckabfälle erzeugt. Zur Ausführung dieser Funktion weist der PTL bewegliche Blenden auf. Allerdings können bei dem PTL auch im normalen Fahrbetrieb Druckabfälle erzeugt werden, welche insbesondere bei kleinen Blendendurchmessern, geringen Pedalkräften oder im System auftretenden Verlusten (z. B. bei Druckabfällen oder Reibungen) den Bedienkomfort und das Übertragungsverhalten der hydraulischen Strecke negativ beeinflussen. Bei den so genannten "Speed Controlled Peak Torque Limiter" (SCPTL) wird hingegen die Blende erst bei einem vorbestimmten Volumenstrom zugeschaltet, um eine Druckreduzierung bzw. einen Druckabfall zu erzeugen.

Eine derartige Druckbegrenzungseinrichtung wird beispielsweise in der EP 1 596 085 B1 beschrieben. Sie weist zumindest einen Blendenkörper mit einer zentralen Blendenbohrung zur Druckreduzierung und einen mittels einer Feder druckbeaufschlagten, topfförmigen Haltering auf, an dessen Boden eine Zentralbohrung und eine oder mehrere auf einem Teilkreis radial von dieser beabstandet angeordnete Öffnungen vorgesehen sind. Der Blendenkörper bzw. die zentrale Blendenbohrung sind beim Einkuppeln der Kupplung bei Überschreitung eines vorbestimmten Volumenstromes des Fluids zuschaltbar und die radial beabstandeten Öffnungen bei Überschreiten eines vorbestimmten Druckabfalls verschließbar. Beim Auskuppeln wird der Haltering gegen das Gehäuse gedrückt und die Blendenbohrung und die Öffnungen werden vom Fluid durchströmt. Beim Einkuppeln strömt das Fluid zunächst ebenfalls über die Blendenbohrung und die Öffnungen. Wenn dabei mehrere Öffnungen durchströmt werden, sind die Druckabfälle gering. Der Druckabfall steigt aber mit dem Volumen des strömenden Fluids an. Wird der Druckabfall größer als die Vorlast der Feder, bewegt sich der Haltering axial gegen die Kraft der Feder, bis er gegen den Gehäuseverschluss gedrückt wird. In diesem Zustand kann nur noch die Blendenbohrung vom Fluid durchströmt werden. Dadurch steigt der Druckabfall schlagartig an und die Einkuppelgeschwindigkeit wird reduziert. Die auf den Haltering wirkende Fläche ist im nichtgeschalteten Zustand kleiner als während der Schaltphase, wodurch die temperaturabhängigen Druckverluste aufgrund einer Leckage zwischen dem Haltering und dem Gehäuse ausgeglichen werden. Allerdings ist der Toleranzbereich, in dem die Blende zugeschaltet wird, relativ groß, wodurch die Einsatzmöglichkeiten des PTL eingeschränkt sind.

Eine in der DE 10 2012 214 107 A1 offenbarte Druckbegrenzungseinrichtung für ein hydraulisches System zur Betätigung einer Kupplung, insbesondere eines Kraftfahrzeuges, soll die Einsatzmöglichkeiten des SCPTL verbessern. Dabei weist die in einer hydraulischen Leitung zwischen einem Geberzylinder und einem Nehmerzylinder angeordnete Druckbegrenzungseinrichtung einen in einer zentralen Bohrung des Gehäuses axial bewegbaren, topfförmigen Blendenkörper auf, der in einem Bodenteil eine zentrische Blendenbohrung und wenigstens eine radial von dieser beabstandete Bypass-Öffnung umfasst. Der Blendenkörper ist derart angeordnet und durch eine Feder beaufschlagt, dass beim Auskuppeln der Kupplung die Blendenbohrung und die Bypass-Öffnung vom Fluid in einer Richtung durchströmt werden und dass beim Einkuppeln der Kupplung die Blendenbohrung und die Bypass-Öffnung zunächst vom Fluid in der entgegen gesetzten Richtung durchströmt werden. Beim Überschreiten eines vorbestimmten Volumenstromes wird der Blendenkörper gegen die Kraft der Feder so bewegt, dass er am Gehäuseverschluss derart zur Anlage kommt, dass nur die zentrale Blendenbohrung vom Fluid durchströmt wird. Dabei ist ein den Blendenkörper konzentrisch umgebendes Hülsenteil zwischen der Innenwandung der zentrischen Bohrung des Gehäuses und der Außenwandung des Blendenkörpers im Gehäuse angeordnet, welches der axialen Führung des Blendenkörpers dient. Sowohl der Blendenkörper als auch das Hülsenteil bestehen aus Stahl, während das Gehäuse dieser bekannten Druckbegrenzungseinrichtung aus einem Kunststoffmaterial besteht. Durch die Verwendung des Hülsenteils als Führung für den Blendenkörper kann das aus Kunststoff bestehende Gehäuse des SCPTL eine größere geometrische Toleranz aufweisen. Blendenkörper und Hülsenteil sind somit kostengünstiger und genauer mit relativ kleinen geometrischen Toleranzen herstellbar. Auch die Toleranz des Spaltes zwischen Hülsenteil und Blendenkörper kann so relativ klein gehalten werden.

Da es für die Funktion der Druckbegrenzungseinrichtung (SCPTL) entscheidend ist, dass der Spalt zwischen dem axial beweglichen Blendenkörper und dessen Führung, insbesondere bei hohen Temperaturen, möglichst gering ausfällt, soll mit Hilfe des in der DE 10 2012 214 107 A1 verwendeten Hülsenteils über den gesamten Einsatztemperaturbereich das Vorhandensein eines schmalen Spaltes gewährleistet werden.

Allerdings bedeutet der Einsatz des zusätzlich eingesetzten, aus Stahl bestehenden, Hülsenteils höhere Kosten und eine aufwendige Fertigung/Montage. Darüber hinaus kann die quer zur axialen Bewegungsrichtung des Blendenkörpers angeordnete Kontaktfläche (Anschlag) am Gehäuse Unebenheiten aufweisen und/oder leicht schräg zu dem Bodenteil des Blendenkörpers ausgebildet sein, wodurch eine vollständige Abdichtung und damit eine sichere Funktion des PTL nicht gewährleistet ist. Um eine Verringerung des Toleranzbereiches, in dem der SC-PTL schaltet, zu erzielen, muss der Blendenkörper mit seinem Bodenteil an der Kontaktfläche des Gehäuses möglichst dicht aufliegen.

Die Aufgabe der Erfindung besteht darin, eine Druckbegrenzungseinrichtung in einer hydraulischen Strecke zur Kupplungsbetätigung vorzuschlagen, welche bei einer kostengünstigen Fertigung eine verbesserte Funktionalität des PTL aufweist.

Diese Aufgabe wird durch eine Druckbegrenzungseinrichtung mit den Merkmalen des Patentanspruchs 1 gelöst. Vorteilhafte Ausgestaltungen ergeben sich aus den Unteransprüchen.

Bei einer Druckbegrenzungseinrichtung in einer hydraulischen Strecke zur Kupplungsbetätigung, welche in einer fluidführenden Leitung angeordnet ist und zumindest einen in einer zentralen Gehäusebohrung eines Gehäuses axial bewegbaren, topfförmigen Blendenkörper aufweist, der in einem Bodenteil eine zentrale Blendenbohrung und wenigstens eine radial von dieser beabstandete Bypass-Öffnung besitzt, wobei der von einer Feder beaufschlagte Blendenkörper zwischen einem eine zentrale Durchgangsbohrung aufweisenden, in der Gehäusebohrung aufgenommenen, Gehäuseverschluss und einer Anschlagfläche des Gehäuses axial bewegbar ist, wobei beim Einkuppeln der Kupplung die Blendenbohrung und die Bypass-Öffnung zunächst vom Fluid durchströmt werden und bei Überschreiten eines vorbestimmten Volumenstromes der Blendenkörper entgegen der Kraft der Feder derart an dem Gehäuseverschluss zur Anlage bringbar ist, dass die wenigstens eine Bypass-Öffnung verschlossen und nur die Blendenbohrung vom Fluid durchströmbar ist, ist erfindungsgemäß der Blendenkörper an einer Außenwandung des Gehäuseverschlusses axial geführt, wobei zwischen dem Gehäuse und dem Bodenteil des Blendenkörpers ein Anlageelement angeordnet ist, mittels welchem eine Abdichtung und/oder ein Ausgleich von Unebenheiten/ Schrägstellungen am Gehäuse und/oder am Blendenkörper realisierbar ist.

In vorteilhafter Weise ist die Außenwandung des Gehäuseverschlusses von einem in Richtung des Bodenteils axial vorstehenden, zylindrischen Führungsteil gebildet, welches einen Endbereich des Gehäuseverschlusses radial außen umgreift, wobei zwischen dem Führungsteil und dem Endbereich ein die Feder aufnehmender Hohlraum vorhanden ist.
Dabei stützt sich die Feder in vorteilhafter Weise einerseits an dem Bodenteil des Blendenkörpers und andererseits an einem Anschlag des Gehäuseverschlusses axial ab.

Vorzugsweise sind das Gehäuse und der Gehäuseverschluss aus Kunststoff und der Blendenkörper aus Stahl gefertigt.

In vorteilhafter Weise besteht das zwischen der Anschlagfläche des Gehäuses und dem Bodenteil des Blendenkörpers angeordnete Anlageelement aus einem Elastomer. Dabei besitzt das Anlageelement zumindest eine radial umlaufend angeordnete Dichtlippe, die an der Anschlagfläche des Gehäuses und/oder an dem Bodenteil des Blendenkörpers abdichtend anliegt.

In einer vorteilhaften Ausführung ist das Anlageelement an dem Blendenkörper befestigt, wobei die zumindest eine Dichtlippe zu der zumindest einen Bypass-Öffnung des Blendenkörpers überlappend angeordnet ist.

Ebenfalls in vorteilhafter Weise dichtet die Dichtlippe an einer an dem Gehäuse gebildeten Dichtkante ab, wobei die von der Dichtkante umschlossene Fläche eine für das Schalten des Blendenkörpers relevante Fläche darstellt.

Ein zwischen dem Führungsteil und einem axialen Bereich des Blendenkörpers ausgebildeter, von Fluid durchströmbarer Spalt weist Abmessungen (Spaltbreite) auf, die gerade so groß sind, dass bei maximaler Betriebstemperatur eine axiale Beweglichkeit des Blendenkörpers noch gewährleistet ist.

Nachfolgend wird die Erfindung anhand von Ausführungsbeispielen mit zugehöriger Zeichnung näher erläutert. Es zeigen:
Fig. 1 einen Längsschnitt einer ersten Ausführungsform der erfindungsgemäßen Druckbegrenzungseinrichtung,
Fig. 2 einen Ausschnitt aus Fig. 1,
Fig. 3 einen Längsschnitt einer weiteren Ausführungsform der erfindungsgemäßen Druckbegrenzungseinrichtung,
Fig. 4 einen Ausschnitt aus Fig. 3.

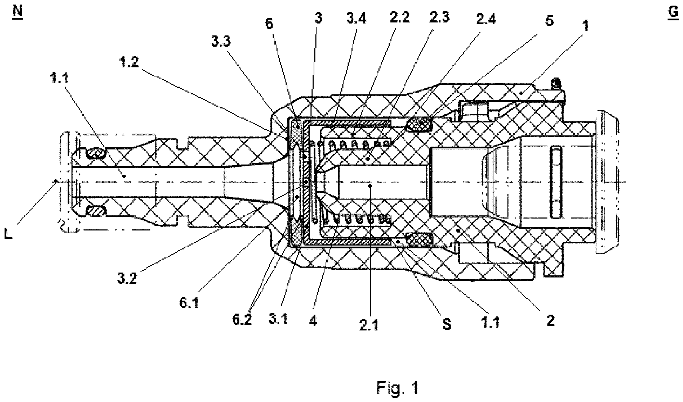

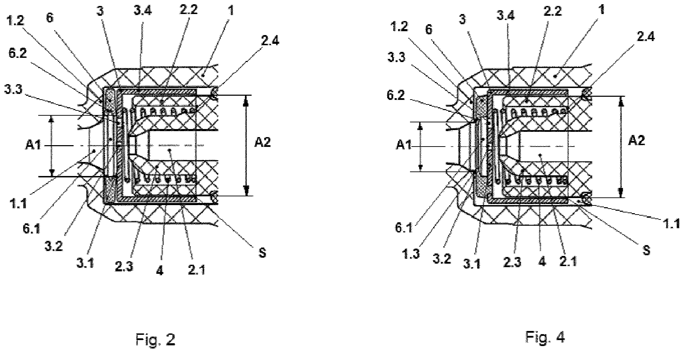

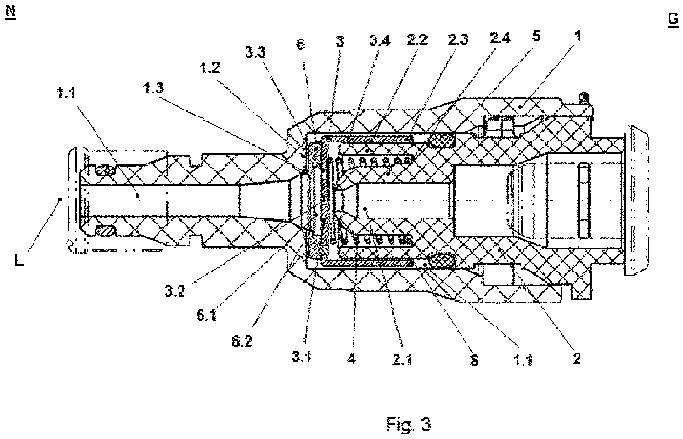

In den Fig. 1 und Fig. 3 ist jeweils eine erfindungsgemäße Druckbegrenzungseinrichtung, die als ein "Speed Controlled Peak Torque Limiter" (SCPTL) ausgebildet ist, im Längsschnitt dargestellt. Die Fig. 2 bzw. Fig. 4 zeigen zur Verdeutlichung der erfindungsgemäßen Lösung jeweils Ausschnitte/Details aus der Fig. 1 bzw. der Fig. 3. Die Druckbegrenzungseinrichtung umfasst im Wesentlichen ein Gehäuse 1, welches beispielsweise in einer Hydraulikleitung zwischen einem Nehmerzylinder und einem Geberzylinder (nicht dargestellt - nur als Nehmerzylinderseite N bzw. Geberzylinderseite G angedeutet) angeordnet ist. Das Gehäuse 1 weist eine zentrale, entlang einer Längsachse L gerichtete Gehäusebohrung 1.1 auf, welche sich zur Nehmerzylinderseite N hin verjüngt und zur Geberzylinderseite G durch einen in der Art eines Steckers ausgebildeten Gehäuseverschluss 2 verschlossen ist. In dem Gehäuseverschluss 2 befindet sich eine mit der Gehäusebohrung 1.1 korrespondierende zentrale Durchgangsbohrung 2.1, durch die Fluid hindurchströmen kann. Außerdem ist in der Gehäusebohrung 1.1 ein topfförmig ausgebildeter Blendenkörper 3 axial beweglich aufgenommen. Nehmerzylinderseitig weist der Blendenkörper 3 ein quer zu der axialen Richtung angeordnetes Bodenteil 3.1 auf, in welchem eine zentrale Blendenbohrung 3.2 und eine - oder auch mehrere - radial zu der Blendenbohrung 3.2 beabstandete Bypass-Öffnung(en) 3.3 angeordnet ist/sind. Mit seinem hohlzylindrisch ausgebildeten axialen Bereich 3.4 befindet sich der Blendenkörper 3 zwischen einer Innenwandung des Gehäuses 1 und einer Außenwandung 2.2 des Gehäuseverschlusses 2, wobei der Blendenkörper 3 an der radial innen befindlichen Außenwandung 2.2 axial geführt ist.

Die Außenwandung 2.2 wird von einem zur Nehmerzylinderseite N bzw. zum Bodenteil 3.1 des Blendenkörpers 3 hin axial vorstehenden, zylindrischen Führungsteil 2.2 gebildet, welches einen an dem Gehäuseverschlusses 2 ausgebildeten Endbereich 2.3 radial außen umgreift. Zwischen dem Führungsteil 2.2 und dem Endbereich 2.3 ist dabei ein Hohlraum ausgebildet, in dem eine vorzugsweise als Druckfeder ausgebildete Feder 4 angeordnet ist. Die Feder 4 ist radial innen an dem Endbereich 2.3 des Gehäuseverschlusses 2 axial geführt und stützt sich mit einem Ende an dem Bodenteil 3.1 des Blendenkörpers 3 ab, wobei es diesen gegen eine Anschlagfläche 1.2 des Gehäuses 1 drückt. Mit ihrem anderen Ende befindet sich die Feder 4 an einem Anschlag 2.4 zur Anlage, der zwischen dem Führungsteil 2.2 und dem Endbereich 2.3 des Gehäuseverschlusses 2 ausgebildet ist.

Des Weiteren ist ein der Abdichtung nach außen dienender Dichtring 5 zwischen dem Gehäuse 1 und dem Gehäuseverschluss 2 angeordnet.

Das Gehäuse 1 und der Gehäuseverschluss 2 bestehen vorzugsweise aus einem Kunststoff. Um kostengünstig geringere geometrische Toleranzen am Blendenkörper 3 zu realisieren, ist dieser aus Stahl gefertigt. Ein zwischen dem Führungsteil 2.2 des Gehäuseverschlusses 2 und dem axialen Bereich 3.4 des Blendenkörpers 3 ausgebildeter Spalt S kann hierbei relativ klein gehalten sein. Dabei sind das aus Kunststoff bestehende Führungsteil 2.2 bzw. der Blendenkörper 3 in ihren Abmessungen so ausgelegt, dass bei der maximalen Betriebstemperatur - und somit geringster Viskosität des Fluids - der Spalt S gerade so groß ist, dass sich der Blendenkörper 3 noch axial bewegen kann.

In Richtung der Nehmerzylinderseite N ist zwischen dem Bodenteil 3.1 des Blendenkörpers 3 und der Anschlagfläche 1.2 des Gehäuses 1 ein vorzugsweise aus einem Elastomer bestehendes Anlageelement 6 angeordnet, welches ebenfalls mit einer zentralen Durchgangsöffnung 6.1 versehen ist. Das zwischen der Anschlagfläche 1.2 und dem Bodenteil 3.1 vorgesehene Anlageelement 6 dichtet zwischen dem Gehäuse 1und dem Blendenkörper 3 ab. Gemäß Fig. 1 - und zugehöriger Fig. 2 - weist das Anlageelement 6 zu diesem Zweck zwei umlaufende Dichtlippen 6.2 auf, welche an der Anschlagfläche 1.2 des Gehäuses 1 bzw. an dem Bodenteil 3.1 des Blendenkörpers 3 anliegen. Dabei ist das Anlageelement 6 so ausgeführt, dass auch Unebenheiten oder Schrägstellungen der beiden korrespondierenden Flächen (Anschlagfläche 1.2 und Bodenteil 3.1) ausgeglichen werden können. Derartige Schrägstellungen können beispielsweise bei einem sehr kleinen Spalt S zwischen dem axialen Bereich 3.4 des Blendenkörpers 3 und dem Führungsteil 2.2 des Gehäuseverschlusses 2 auftreten (Verklemmen).

Die Fig. 1 (wie auch die Fig. 2 bis Fig. 4) zeigt die Druckbegrenzungseinrichtung in einem ausgekuppelten Zustand. Der Blendenkörper 3 befindet sich mit seinem Bodenteil 3.1 über das dazwischen liegende Anlageelement 6 zur Anlage an der Anschlagfläche 1.2 des Gehäuses 1, wobei sowohl die Blendenbohrung 3.2 als auch die Bypass-Öffnung 3.3 von dem Fluid in Richtung Nehmerzylinder N durchströmt werden.

Hebt der Blendenkörper 3 beim Einkuppeln von der Anschlagfläche 1.2 des Gehäuses 1 bzw. von dem Anlageelement 6 ab, so entsteht ein zusätzlicher Bypass, indem das Fluid nicht nur über die zentrale Blendenbohrung 3.2 und über die Bypass-Öffnung 3.3 des Blendenkörpers 3 in Richtung Geberzylinder G gelangt, sondern auch durch den Spalt S zwischen dem axialen Bereich 3.4 des Blendenkörpers 3 und dem axialen Führungsteil 2.2 des Gehäuseverschlusses 2 strömt. Dies führt zu einer Verringerung des Druckabfalls am Blendenkörper 3. Da sich beim Abheben von der Anschlagfläche 1.2 die wirksame Fläche des Drucks auf die gesamte Fläche des Bodenteils 3.1 vergrößert hat, kann die Verringerung des Druckabfalls kompensiert werden, wenn der Spalt S nicht zu groß bzw. die Viskosität der Flüssigkeit nicht zu klein ist. Findet keine vollständige Kompensation der Druckabfallverringerung statt, erhöht sich der zum kompletten Schalten (Kuppelvorgang) des SCPTL benötigte Volumenstrom, wodurch der Schaltpunkt unzulässig groß werden kann.

Mit der erfindungsgemäßen Anordnung der axialen Führung des Blendenkörpers 3 an dem gegenüber dem Gehäuse 1 radial innen befindlichen Führungsteil 2.2 des Gehäuseverschlusses 2 kann einer Verringerung des Druckabfalls entgegengewirkt werden. Dabei sind die Abmessungen/Durchmesser des Führungsteils 2.2 und des Blendenkörpers 3 so ausgelegt, dass bei maximaler Betriebstemperatur der Spalt S die geringste Abmessung aufweist, die aber ausreichend ist, dass ein Verklemmen des Blendenkörpers 3 auf dem Führungsteil 2.2 des Gehäuseverschlusses 2 vermieden wird. Bei abnehmender Temperatur vergrößert sich der Spalt S aufgrund der unterschiedlichen Temperaturausdehnungskoeffizienten von Stahl und Kunststoff. Allerdings vergrößert sich auch die Viskosität in noch größerem Maße, wodurch die Reduzierung des Druckabfalls am Blendenkörper 3 mit fallender Temperatur trotz der Vergrößerung des Spaltes S abnimmt.

Indem der Blendenkörper 3 an dem Führungsteil 2.2 des Gehäuseverschlusses 2 geführt wird, kann beispielsweise auf eine zusätzliche Hülse als Führung verzichtet werden. Die unterschiedlichen Temperaturausdehnungskoeffizienten des aus Stahl bestehenden Blendenkörpers 3 und des aus Kunststoff bestehenden Gehäuseverschlusses 2 wirken sich nicht negativ auf die Funktionalität des SCPTL aus.

Durch den Einsatz des als Formteil ausgeführten, aus einem Elastomer bestehenden, Anlageelementes 6 wird die Dichtfunktion zwischen Blendenkörper 3 und Gehäuse 1 und somit auch die Funktion des SCPTL verbessert.

Bei dem in Fig. 2 gezeigten Ausschnitt aus der Druckbegrenzungseinrichtung gemäß der Fig. 1 ist eine Fläche A1 gekennzeichnet, die für den nicht geschalteten (ausgekuppelten) Zustand des Schaltvorgangs des Blendenkörpers 3 relevant ist. Die Größe der den Schaltpunkt des SCPTL beeinflussenden Fläche A1 ergibt sich aus dem Durchmesser der Durchgangsöffnung 6.1 des Anlageelementes 6. Da es sich um ein Elastomerteil handelt, unterliegt es größeren Toleranzen, das heißt, dass die Fläche A1 und somit auch der Schaltpunkt größere Toleranzen aufweisen können. Eine weitere angeführte Fläche A2 stellt die während des Schaltvorgangs relevante Fläche dar, bei der sich der Blendenkörper 3 mit seinem Bodenteil 3.1 zwischen der Anschlagfläche 1.2 des Gehäuses 1(bzw. dem Anlageelement 6) und dem Gehäuseverschluss 2/Endbereich 2.3 befindet. Sobald der Blendenkörper 3 sich in diesem Bereich befindet, kann über den Spalt S zwischen Blendenkörper 3 (axialer Bereich 3.4) und Gehäuseverschluss 2 (Führungsteil 2.2) zusätzlich Fluid strömen, wodurch sich bei gleichbleibendem Volumenstrom der Druckabfall am Blendenkörper 3 verringert.

Dieser Vorgang kann folgendermaßen veranschaulicht werden: Wenn Δp der Druckabfall ist, bei dem der Blendenkörper 3 von der Fläche A1 abhebt, so gilt für die aufgrund des Spaltes S erlaubte Verringerung des Druckabfalls Δp_{erlaubt} = Δp · (1 - A1/A2). Je kleiner das Flächenverhältnis A1/A2, desto größer kann der zulässige Spalt S sein. Das bedeutet, dass die den Spalt S beeinflussenden Bauteile größere Toleranzen besitzen können. Um größere Toleranzen für die den Spalt S beeinflussenden Bauteile zulassen zu können, muss somit das Flächenverhältnis A1/A2 verkleinert werden. Gleichzeitig sollen die Toleranzen der Fläche A1 und somit auch die Schaltpunkttoleranz verringert werden.

Allerdings ist bei der in den Fig. 1 bzw. Fig. 2 gezeigten Ausführungsform eine Verringerung der Fläche A1 durch die radiale Anordnung der Bypass-Öffnung(en) 3.3 begrenzt.

Mit der in Fig. 3 dargestellten Ausführungsform einer erfindungsgemäßen Druckbegrenzungseinrichtung wird eine Verringerung des Flächenverhältnisses A1/A2 erreicht. Gleiche Bauteile der Fig. 1 und Fig. 3 sind dabei mit gleichen Bezugszeichen versehen. Die Fig. 4 zeigt zur Verdeutlichung der erfindungsgemäßen Konstruktion einen Ausschnitt aus Fig. 3.

Bei dieser Ausführungsform sind die Toleranzen der Fläche A1 und damit auch die Schaltpunkttoleranz verkleinert worden. Somit fällt das Flächenverhältnis A1/A2 kleiner aus, wodurch wiederum größere Toleranzen für die den Spalt S beeinflussenden Bauteile möglich sind.

Dies wird dadurch erzielt, dass das als Elastomerteil ausgebildete Anlageelement 6 an den Blendenkörper 3 angebunden ist. Das Anlageelement 6 weist eine an der Anschlagfläche 1.2 des Gehäuses 1 umlaufende Dichtlippe 6.2 auf, die überlappend zu der Bypass-Öffnung 3.3 angeordnet ist. An dem Gehäuse 1 ist dabei eine die Abdichtung realisierende Dichtkante 1.3 ausgebildet, wodurch die Toleranzen am Gehäuse 1 kleiner als am Anlageelement 6 ausgeführt sein können. Die Elastizität der Dichtlippe 6.2 gleicht Unebenheiten und eventuell vorhandene Schrägstellungen der Dichtkante 1.3 bezüglich des Blendenkörpers 3 aus. Die von der Dichtkante 1.3 umschlossene Fläche bildet dabei die für den Schaltvorgang relevante Fläche A1.

Durch die von dem Blendenkörper 3 weg gerichtete, an dem Gehäuse 1 anliegende Dichtlippe 6.2 wird die Fläche A1 zudem nicht mehr von der radialen Lage der Bypass-Öffnung 3.3 begrenzt. Die den Schaltpunkt des SCPTL beeinflussende Fläche A1 ist entsprechend kleiner ausgebildet als bei der in Fig. 1 gezeigten Ausführung des SCPTL. Somit kann bei dem in Fig. 3 bzw. Fig. 4 dargestellten Ausführungsbeispiel durch die Fixierung des Anlageelementes/Elastomerteils 6 auf dem Blendenkörper 3 die zum Schalten des SCPTL relevante Fläche A1 verkleinert und die Toleranzen der den Spalt S beeinflussenden Bauteile (Gehäuseverschluss 2, Blendenkörper 3) vergrößert werden.

### Bezugszeichenliste

- 1: Gehäuse
- 1.1: Gehäusebohrung
- 1.2: Anschlagfläche
- 1.3: Dichtkante
- 2: Gehäuseverschluss
- 2.1: Durchgangsbohrung
- 2.2: Außenwandung/Führungsteil
- 2.3: Endbereich
- 2.4: Anschlag
- 3: Blendenkörper
- 3.1: Bodenteil
- 3.2: zentrale Blendenbohrung
- 3.3: Bypass-Öffnung
- 3.4: axialer Bereich
- 4: Feder
- 5: Dichtring
- 6: Anlageelement/Elastomerteil
- 6.1: Durchgangsöffnung
- 6.2: Dichtlippe
- A1: Fläche
- A2: Fläche
- L: Längsachse
- G: Geberzylinderseite
- N: Nehmerzylinderseite
- S: Spalt

## Patentansprüche

1. Druckbegrenzungseinrichtung in einer hydraulischen Strecke zur Kupplungsbetätigung, welche in einer fluidführenden Leitung angeordnet ist und zumindest einen in einer zentralen Gehäusebohrung (1.1) eines Gehäuses (1) axial bewegbaren, topfförmigen Blendenkörper (3) aufweist, der in einem Bodenteil (3.1) eine zentrale Blendenbohrung (3.2) und wenigstens eine radial von dieser beabstandete Bypass-Öffnung (3.3) besitzt, wobei der von einer Feder (4) beaufschlagte Blendenkörper (3) zwischen einem eine zentrale Durchgangsbohrung (2.1) aufweisenden, in der Gehäusebohrung (1.1) aufgenommenen, Gehäuseverschluss (2) und einer Anschlagfläche (1.2) des Gehäuses (1) axial bewegbar ist, wobei beim Einkuppeln der Kupplung die Blendenbohrung (3.2) und die Bypass-Öffnung (3.3) zunächst vom Fluid durchströmt werden und bei Überschreiten eines vorbestimmten Volumenstromes der Blendenkörper (3) entgegen der Kraft der Feder (4) derart an dem Gehäuseverschluss (2) zur Anlage bringbar ist, dass die wenigstens eine Bypass-Öffnung (3.3) verschlossen ist und die Blendenbohrung (3.2) vom Fluid durchströmt wird, **dadurch gekennzeichnet, dass** der Blendenkörper (3) an einer Außenwandung (2.2) des Gehäuseverschlusses (2) axial geführt ist, und zwischen dem Gehäuse (1) und dem Bodenteil (3.1) des Blendenkörpers (3) ein Anlageelement (6) angeordnet ist, mittels welchem eine Abdichtung und/oder ein Ausgleich von Unebenheiten/Schrägstellungen am Gehäuse (1) und/oder am Blendenkörper (3) realisierbar ist.

2. Druckbegrenzungseinrichtung nach Anspruch 1, **dadurch gekennzeichnet, dass** die Außenwandung (2.2) des Gehäuseverschlusses (2) von einem in Richtung des Bodenteils (3.1) axial vorstehenden, zylindrischen Führungsteil (2.2) gebildet ist, welches einen Endbereich (2.3) des Gehäuseverschlusses (2) radial außen umgreift, wobei zwischen dem Führungsteil (2.2) und dem Endbereich (2.3) ein die Feder (4) aufnehmender Hohlraum vorhanden ist.

3. Druckbegrenzungseinrichtung nach Anspruch 2, **dadurch gekennzeichnet, dass** die Feder (4) sich einerseits an dem Bodenteil (3.1) des Blendenkörpers (3) und andererseits an einem zwischen dem Führungsteil (2.2) und dem Endbereich (2.3) vorhandenen Anschlag (2.4) des Gehäuseverschlusses (2) axial abstützt.

4. Druckbegrenzungseinrichtung nach einem der Ansprüche 1 bis 3, **dadurch gekennzeichnet, dass** das Gehäuse (1) und der Gehäuseverschluss (2) aus Kunststoff und der Blendenkörper (3) aus Stahl gefertigt sind.

5. Druckbegrenzungseinrichtung nach einem der Ansprüche 1 bis 4, **dadurch gekennzeichnet, dass** das zwischen der Anschlagfläche (1.2) des Gehäuses (1) und dem Bodenteil (3.1) des Blendenkörpers (3) angeordnete Anlageelement (6) aus einem Elastomer besteht.

6. Druckbegrenzungseinrichtung nach einem der Ansprüche 1 bis 5, **dadurch gekennzeichnet, dass** das Anlageelement (6) zumindest eine radial umlaufend angeordnete Dichtlippe (6.2) aufweist, die an der Anschlagfläche (1.2) des Gehäuses (1) und/oder an dem Bodenteil (3.1) des Blendenkörpers (3) abdichtend anliegt.

7. Druckbegrenzungseinrichtung nach einem der Ansprüche 1 bis 6, **dadurch gekennzeichnet, dass** das Anlageelement (6) an dem Blendenkörper (3) befestigt ist.

8. Druckbegrenzungseinrichtung nach Anspruch 7, **dadurch gekennzeichnet, dass** die zumindest eine Dichtlippe (6.2) zu der zumindest einen Bypass-Öffnung (3.3) des Blendenkörpers (3) überlappend angeordnet ist.

9. Druckbegrenzungseinrichtung nach einem der Ansprüche 6 bis 8, **dadurch gekennzeichnet, dass** die Dichtlippe (6.2) an einer an dem Gehäuse (1) ausgebildeten Dichtkante (1.3) abdichtet, wobei die von der Dichtkante (1.3) umschlossene Fläche eine für das Schalten des Blendenkörpers (3) relevante Fläche (A1) darstellt.

10. Druckbegrenzungseinrichtung nach einem der Ansprüche 2 bis 9, **dadurch gekennzeichnet, dass** zwischen dem Führungsteil (2.2) und einem axialen Bereich (3.4) des Blendenkörpers (3) ein von Fluid durchströmbarer Spalt (S) ausgebildet ist, dessen Abmessungen gerade so groß sind, dass bei maximaler Betriebstemperatur eine axiale Beweglichkeit des Blendenkörpers (3) noch gewährleistet ist.

## Claims

1. Pressure limiting device in a hydraulic section for clutch actuation, which pressure limiting valve is arranged in a fluid-conducting line and has at least one pot-shaped orifice body (3) which can be moved axially in a central housing bore (1.1) of a housing (1) and, in a bottom part (3.1), has a central orifice bore (3.2) and at least one bypass opening (3.3) which is spaced apart radially by the said central orifice bore (3.2), it being possible for the orifice body (3) which is loaded by a spring (4) to be moved axially between a housing closure (2) and a stop face (1.2) of the housing (1), which housing closure (2) has a central through bore (2.1) and is received in the housing bore (1.1), the orifice bore (3.2) and the bypass opening (3.3) being flowed through by the fluid first of all during the engagement of the clutch, and it being possible, if a predefined volumetric flow is exceeded, for the orifice body (3) to be brought into contact with the housing closure (2) counter to the force of the spring (4), in such a way that the at least one bypass opening (3.3) is closed and the orifice bore (3.2) is flowed through by the fluid, **characterized in that** the orifice body (3) is guided axially on an outer wall (2.2) of the housing closure (2), and a bearing element (6) is arranged between the housing (1) and the bottom part (3.1) of the orifice body (3), by means of which bearing element (6) a seal and/or a compensation of unevennesses/oblique positions on the housing (1) and/or on the orifice body (3) can be realized.

2. Pressure limiting device according to Claim 1, **characterized in that** the outer wall (2.2) of the housing closure (2) is formed by a cylindrical guide part (2.2) which projects axially in the direction of the bottom part (3.1) and engages around an end region (2.3) of the housing closure (2) radially on the outside, there being a cavity which receives the spring (4) between the guide part (2.2) and the end region (2.3).

3. Pressure limiting device according to Claim 2, **characterized in that** the spring (4) is supported axially on one side on the bottom part (3.1) of the orifice body (3) and on the other side on a stop (2.4) of the housing closure (2), which stop (2.4) is present between the guide part (2.2) and the end region (2.3).

4. Pressure limiting device according to one of Claims 1 to 3, **characterized in that** the housing (1) and the housing closure (2) are manufactured from plastic and the orifice body (3) is manufactured from steel.

5. Pressure limiting device according to one of Claims 1 to 4, **characterized in that** the bearing element (6) which is arranged between the stop face (1.2) of the housing (1) and the bottom part (3.1) of the orifice body (3) consists of an elastomer.

6. Pressure limiting device according to one of Claims 1 to 5, **characterized in that** the bearing element (6) has at least one radially circumferentially arranged sealing lip (6.2) which bears sealingly against the stop face (1.2) of the housing (1) and/or against the bottom part (3.1) of the orifice body (3).

7. Pressure limiting device according to one of Claims 1 to 6, **characterized in that** the bearing element (6) is fastened to the orifice body (3).

8. Pressure limiting device according to Claim 7, **characterized in that** the at least one sealing lip (6.2) is arranged in an overlapping manner with respect to the at least one bypass opening (3.3) of the orifice body (3).

9. Pressure limiting device according to one of Claims 6 to 8, **characterized in that** the sealing lip (6.2) seals on a sealing edge (1.3) which is configured on the housing (1), the area which is enclosed by the sealing edge (1.3) representing an area (A1) which is relevant for the switching of the orifice body (3).

10. Pressure limiting device according to one of Claims 2 to 9, **characterized in that** a gap (S) which can be flowed through by fluid is configured between the guide part (2.2) and an axial region (3.4) of the orifice body (3), the dimensions of which gap (S) are just large enough that an axial mobility of the orifice body (3) is still ensured at a maximum operating temperature.

## Revendications

1. Dispositif de limitation de la pression dans une section hydraulique pour la commande d'embrayage, qui est disposé dans une conduite de guidage de fluide et qui présente au moins un corps de diaphragme (3) en forme de pot, déplaçable axialement dans un alésage de boîtier central (1.1) d'un boîtier (1), qui possède dans une partie de fond (3.1) un alésage de diaphragme central (3.2) et au moins une ouverture de dérivation (3.3) espacée radialement de celui-ci, le corps de diaphragme (3) sollicité par un ressort (4) pouvant être déplacé axialement entre une fermeture de boîtier (2) présentant un alésage traversant central (2.1), reçue dans l'alésage de boîtier (1.1), et une surface de butée (1.2) du boîtier (1), l'alésage de diaphragme (3.2) et l'ouverture de dérivation (3.3), lors de l'embrayage de l'accouplement, étant d'abord parcourus par du fluide et lors du dépassement d'un débit volumique prédéterminé, le corps de diaphragme (3) pouvant être amené à l'encontre de la force du ressort (4) en appui contre la fermeture de boîtier (2) de telle sorte que l'au moins une ouverture de dérivation (3.3) soit fermée et que l'alésage de diaphragme (3.2) soit parcouru par du fluide, **caractérisé en ce que** le corps de diaphragme (3) est guidé axialement au niveau d'une paroi extérieure (2.2) de la fermeture de boîtier (2) et un élément d'appui (6) est disposé entre le boîtier (1) et la partie de fond (3.1) du corps de diaphragme (3), au moyen duquel une étanchéité et/ou un équilibrage des inégalités/inclinaisons peut être réalisé(e) sur le boîtier (1) et/ou sur le corps de diaphragme (3) .

2. Dispositif de limitation de la pression selon la revendication 1, **caractérisé en ce que** la paroi extérieure (2.2) de la fermeture de boîtier (2) est formée par une partie de guidage cylindrique (2.2) faisant saillie axialement dans la direction de la partie de fond (3.1), laquelle partie de guidage vient en prise radialement à l'extérieur autour d'une région d'extrémité (2.3) de la fermeture de boîtier (2), une cavité recevant le ressort (4) étant prévue entre la partie de guidage (2.2) et la région d'extrémité (2.3).

3. Dispositif de limitation de la pression selon la revendication 2, **caractérisé en ce que** le ressort (4) s'appuie axialement d'une part contre la partie de fond (3.1) du corps de diaphragme (3) et d'autre part contre une butée (2.4) de la fermeture de boîtier (2) prévue entre la partie de guidage (2.2) et la région d'extrémité (2.3).

4. Dispositif de limitation de la pression selon l'une quelconque des revendications 1 à 3, **caractérisé en ce que** le boîtier (1) et la fermeture de boîtier (2) sont fabriqués en plastique et le corps de diaphragme (3) est fabriqué en acier.

5. Dispositif de limitation de la pression selon l'une quelconque des revendications 1 à 4, **caractérisé en ce que** l'élément d'appui (6) disposé entre la surface de butée (1.2) du boîtier (1) et la partie de fond (3.1) du corps de diaphragme (3) se compose d'un élastomère.

6. Dispositif de limitation de la pression selon l'une quelconque des revendications 1 à 5, **caractérisé en ce que** l'élément d'appui (6) présente au moins une lèvre d'étanchéité (6.2) disposée radialement sur la périphérie, qui s'applique hermétiquement contre la surface de butée (1.2) du boîtier (1) et/ou contre la partie de fond (3.1) du corps de diaphragme (3).

7. Dispositif de limitation de la pression selon l'une quelconque des revendications 1 à 6, **caractérisé en ce que** l'élément d'appui (6) est fixé au corps de diaphragme (3).

8. Dispositif de limitation de la pression selon la revendication 7, **caractérisé en ce que** l'au moins une lèvre d'étanchéité (6.2) est disposée de manière à chevaucher l'au moins une ouverture de dérivation (3.3) du corps de diaphragme (3).

9. Dispositif de limitation de la pression selon l'une quelconque des revendications 6 à 8, **caractérisé en ce que** la lèvre d'étanchéité (6.2) réalise l'étanchéité au niveau d'une arête d'étanchéité (1.3) réalisée sur le boîtier (1), la surface entourée par l'arête d'étanchéité (1.3) constituant une surface (A1) servant pour la commutation du corps de diaphragme (3).

10. Dispositif de limitation de pression selon l'une quelconque des revendications 2 à 9, **caractérisé en ce qu'**entre la partie de guidage (2.2) et une région axiale (3.4) du corps de diaphragme (3) est réalisée une fente (S) pouvant être parcourue par du fluide, dont les dimensions sont précisément suffisamment grandes pour qu'une mobilité axiale du corps de diaphragme (3) soit encore garantie à une température de fonctionnement maximale.
